# EUROPÄISCHE PATENTSCHRIFT

(11) **EP 1 951 545 B1**
(45) Veröffentlichungstag und Bekanntmachung des Hinweises auf die Patenterteilung: **22.04.2009**
(21) Anmeldenummer: 06806479.9
(22) Anmeldetag: 24.10.2006
(51) Int. Cl.: B60N 2/48, B60N 2/427, B60R 21/13

(54) **ENTRIEGELUNGSVORRICHTUNG FÜR EIN STEUERTEIL**
UNLOCKING DEVICE FOR A CONTROL DEVICE
DISPOSITIF DE DEVERROUILLAGE POUR PIECE A COMMANDER

(30) Priorität: 24.11.2005 DE 102005056816
(43) Veröffentlichungstag der Anmeldung: 06.08.2008
(73) Patentinhaber: Hydac Electronic GmbH, 66128 Saarbrücken (DE)
(72) Erfinder: JACOBUS, Heinz, 66125 Dudweiler (DE); WEINGARDT, Alexander, 66117 Saarbrücken (DE)
(74) Vertreter: Bartels, Martin Erich Arthur
(86) Internationale Anmeldenummer: PCT/EP2006/010211
(87) Internationale Veröffentlichungsnummer: WO 2007/059834

(56) Entgegenhaltungen:
- WO-A-01/87666
- WO-A-20/04056606
- DE-A1- 10 215 054
- DE-A1- 19 830 407
- DE-C1- 19 949 944

## Beschreibung

Die Erfindung betrifft eine Entriegelungsvorrichtung für ein Steuerteil, mit einem Betätigungsmagneten, der, in einem Spulenkörper und/oder in Gehäuseteilen des Betätigungsmagneten geführt, ein Betätigungsteil aufweist, das entlang einer ersten Achse verfahrbar ist und das in einer Betätigungsstellung einen Schwenkweg für eine Steuereinrichtung freigibt, die um eine zweite Achse schwenkbar angeordnet ist, wobei die Steuereinrichtung über ein Verriegelungsteil verfügt, das, mittels des Betätigüngsteils über die Steuereinrichtung entriegelt, die Bewegungsbahn für das anzusteuernde Steuerteil freigibt.

Vorrichtungen dieser Art sind bekannt, vergleiche DE 102 15 054 A1. Dahingehende Entriegelungsvorrichtungen können für eine Vielzahl von Anwendungsfällen eingesetzt werden. Insbesondere dort, wo es darauf ankommt, gezielt und funktionssicher einen Auslösevorgang für ein technisches Bauteil zu realisieren, sind Entriegelungsvorrichtungen mit Betätigungsmagneten vorzuziehen, da der dahingehende Betätigungsmagnet auch im rauhen Alltagsbetrieb, etwa bei auftretenden Schwingungen oder Stößen, erfahrungsgemäß funktionssicher im Gebrauch ist. Mit einer solchen Entriegelungsvorrichtung lassen sich insbesondere im Kraftfahrzeugbereich sicherheitstechnisch relevante Bauteile entriegeln und zur Funktion bringen, sei es in Form eines aufzustellenden Überrollbügels, sei es in Form einer im Crashfall sich nach vorne bewegenden Kopfstütze, um dergestalt den freien Auftreffweg zwischen Hinterkopf des Sitzbenutzers und Kopfauftreff-Fläche an der Kopfstütze zu verringern, etc..

Der Erfindung liegt die Aufgabe zugrunde, eine Entriegelungsvorrichtung der in Betracht stehenden Art zur Verfügung zu stellen, die sich durch eine kompakte und auch unter rauhen Betriebsbedingungen funktionssichere Bauweise auszeichnet.

Erfindungsgemäß ist diese Aufgabe durch eine Entriegelungsvorrichtung gelöst, die die Merkmale des Patentanspruches 1 in seiner Gesamtheit aufweist.

Aufgrund der speziellen Achsanordnung bei der erfindungsgemäßen Entriegelungsvorrichtung läßt sich der Betätigungsmagnet mit Betätigungsteil und querschwenkendem Schwenkhebel auf sehr kleinem Bauraum unterbringen, so dass sich die dahingehende Vorrichtung platzsparend innerhalb von Kraftfahrzeugen unterbringen läßt. Aufgrund des platzsparenden Aufbaus läßt sich die Entriegelungsvorrichtung auch dort unmittelbar an der Stelle eines Auslösevorganges einsetzen, wo bisher im Stand der Technik gegebenenfalls erst aufwendig zu handhabende Seil- oder Bowdenzüge über größere Wegstrecken den Auslösevorgang bewerkstelligt haben.

Bei der erfindungsgemäßen Entriegelungsvorrichtung ist der Schwenkhebel der Steuereinrichtung um die zweite Achse schwenkbar in einem Gehäuseteil geführt, wobei die zweite Achse parallel zur ersten Achse verläuft, der Schwenkhebel an seinem einen freien Ende im unbetätigten Zustand des Betätigungsmagneten in Anlage mit dem Betätigungsteil ist und wobei am anderen Ende des Schwenkhebels das Verriegelungsteil in der Verriegelungsstellung gehalten ist. Aufgrund des eingesetzten Schwenkhebels läßt sich zeitverzögerungsfrei nach Betätigen des Betätigungsmagneten durch Bestromung der E.ntriegelungsvorgang hemmnisfrei auslösen.

Vorzugsweise ist dabei ferner vorgesehen, dass im betätigten Zustand des Betätigungsmagneten das Steuerteil mittels eines Energiespeichers die Entriegelung für den Schwenkhebel veranlaßt, der insoweit um die zweite Achse in die Entriegelungsstellung verschwenkt. Aufgrund des mittels des Energiespeichers vorgespannten Steuerteils läßt sich ruck- und verzögerungsfrei der Entriegelungsvorgang schlagartig auslösen, was wiederum erhöhten Sicherheitsanforderungen an eine zeitnahe Auslösung der Sicherheitseinrichtung entgegenkommt.

Die Anordnung kann auch so getroffen sein, dass das Verriegelungsteil im Gehäuseteil geführt ist und, mittels eines Blockierteils in der entriegelten Stellung gehalten, ein ungewolltes erneutes Verriegeln des Steuerteils verhindert ist. Hierdurch ist sichergestellt, dass nicht versehentlich eine bereits aktivierte Sicherheitseinrichtung in die Ausgangslage zurückgebracht wird, von wo aus sie bei erneuter Betätigung gegebenenfalls nicht mehr funktionssicher ihre Aufgabe erfüllen kann, beispielsweise weil die Sicherheitseinrichtung selbst oder deren Teile vor einer erneuten Inbetriebnahme erst gegen Neuteile auszutauschen wären. Sofern vorzugsweise für das Steuerteil eine Federanordnung eingesetzt ist, ebenso wie für das Blockierteil, läßt sich dem Grunde nach mit nur einer technischen Betätigungsart in Form von Federn oder Federelementen der jeweilige Auslöse- oder Blockierzüstand herstellen, was erhöhten Praktikabilitätsanforderungen Rechnung trägt.

Weitere vorteilhafte Ausführungsformen der erfindungsgemäßen Entriegelungsvorrichtung sind Gegenstand der sonstigen Unteransprüche.

Im Folgenden wird die erfindungsgemäße Entriegelungsvorrichtung für ein Steuerteil gemäß einem Ausführungsbeispiel nach der Zeichnung näher erläutert. Dabei zeigen in prinzipieller und nicht maßstäblicher. Darstellung die
- Fig.1: in perspektivischer Anordnung eine Vorderansicht auf die wesentlichen Teile der erfindungsgemäßen Vorrichtung;
- Fig.2 und 3: einmal im verriegelten, einmal im entriegelten Zustand die Vorrichtung nach der Fig.1 von der Seite her gesehen;
- Fig.4: eine perspektivische Draufsicht auf den Betätigungsmagneteri mit Sperrklinke;
- Fig. 5: ein teilweise aufgeschnittenes Gehäuse der Vorrichtung mit eingesetztem Blockierelement.

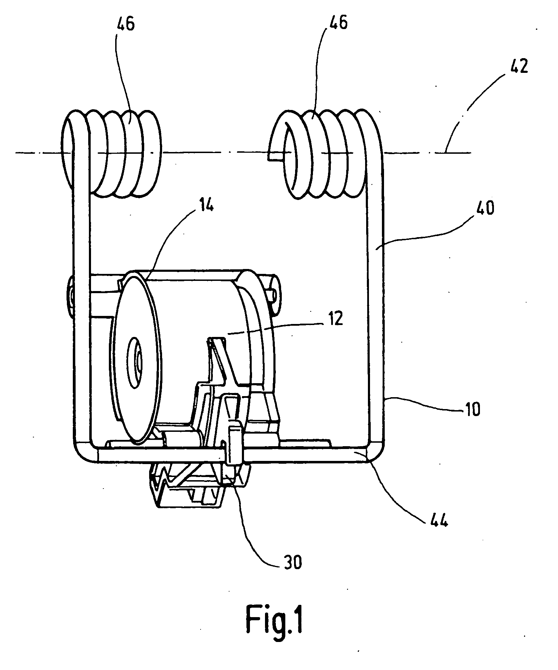

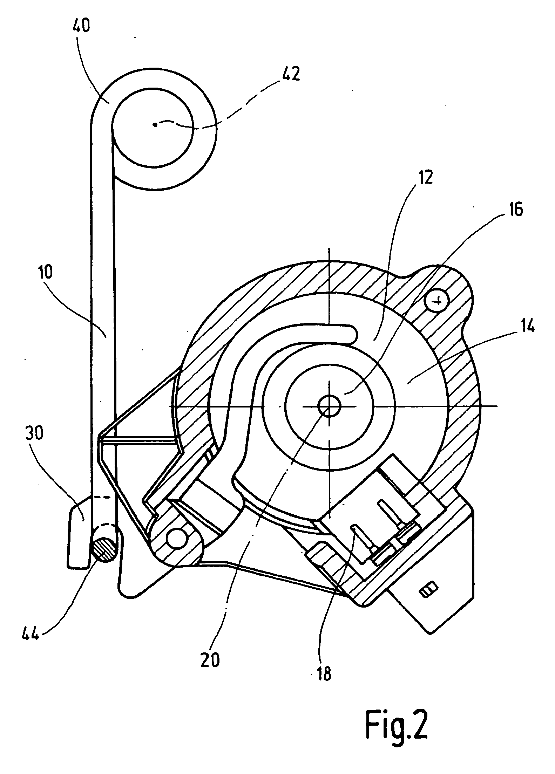

Die Entriegelungsvorrichtung für ein Steuerteil 10 nach der perspektivischen Ansicht gemäß Fig.1 zeigt deren wichtigste Bestandteile, wie einen Betätigungsmagneten 12. Der Betätigungsmagnet 12 weist einen Spulenkörper 14 auf mit einer nicht näher dargestellten Spulenwicklung, in der ein zylinder- oder stangenartiges Betätigungsteil 16 längsverfahrbar geführt ist. Der in der Art eines üblichen Elektromagneten ausgebildete Betätigungsmagnet 12 ist derart ausgelegt, dass bei Bestromung des Spulenkörpers 14 über den Anschlußstecker 18 das Betätigungsteil 16 nach innen gezogen wird, also in Blickrichtung auf die Fig.2 gesehen in Richtung der hinteren Bildebene. Eine nicht näher dargestellte Rückstellfeder kann bei nicht bestromtem Spulenkörper 14 das Betätigungsteil 16 derart rückstellen, dass dieses mit einem vorgebbaren Überstand über die Vorderseite des Spulenkörpers 14 einschließlich der Vorderseite des Betätigungsmagneten 12 vorsteht. Insoweit ist das Betätigungsteil 16 also entlang einer ersten Achse 20 verfahrbar angeordnet.

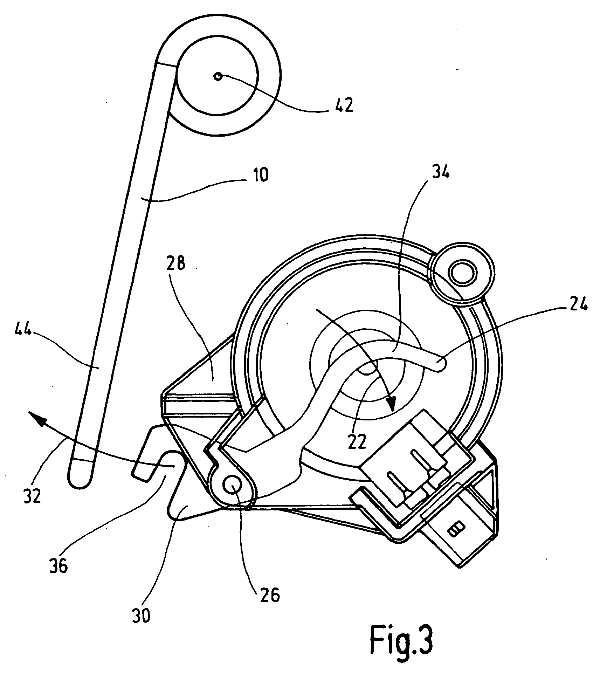

In der in der Fig. 3 dargestellten Betätigungsstellung der Entriegelungsvorrichtung ist das Betätigungsteil 16 durch den Betätigungsmagneten 12 nach hinten gezogen und gibt somit einen zu der ersten Achse 20 querverlaufenden Schwenkweg 22 frei, der in der Fig.3 mit einem Pfeil wiedergegeben ist, und entlang dieses Schwenkweges 22 verschwenkt die Steuereinrichtung 24 in Uhrzeigerrichtung um eine zweite Achse 26, die parallel zur ersten Achse 20 verläuft. Die dahingehende zweite Achse 26 ist beispielsweise als Schwenkachse oder Schwenkzapfen ausgebildet und mit ihren freien Enden insoweit endseitig in einem Gehäuseteil 28, vorzugsweise aus einem geeigneten Kunststoffmaterial gebildet, geführt. Wie die Fig.1 bis 3 weiter zeigen, verfügt die Steuereinrichtung 24 über ein Verriegelungsteil 30, das, mittels des Betätigungsteils 16 über die Steuereinrichtung 24 entriegelt, die Bewegungsbahn 32, dargestellt in der Fig.3 mit einem Pfeil, für das anzusteuernde Steuerteil 10 freigibt. Sofern die Fig.1 und 2 die verriegelte Stellung für das Steuerteil 10 betreffen, ist ersichtlich, dass das Verriegelungsteil 30 das Steuerteil 10 zumindest teilweise umfaßt und derart in der verriegelten Stellung festhält.

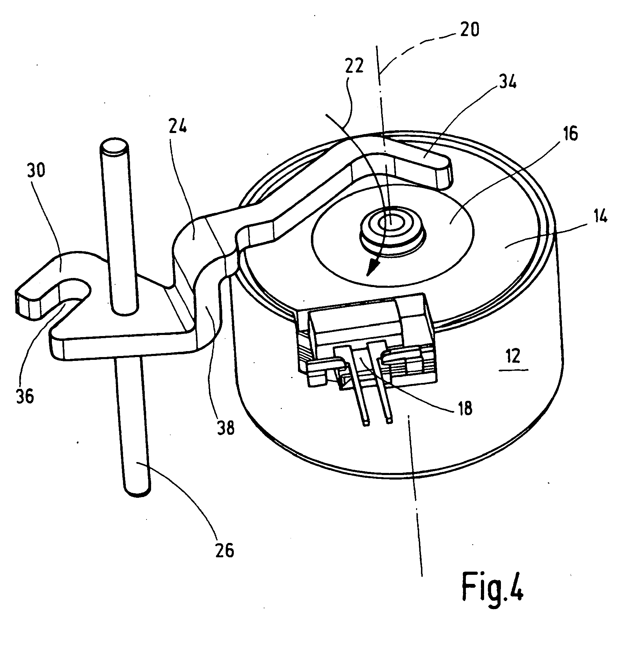

Die Steuereinrichtung 24 weist einen Schwenkhebel 34 auf, wie er in der Fig.4 näher dargestellt ist. Dieser Schwenkhebel 34 ist, wie bereits dargelegt, um die zweite Achse 26 schwenkbar in dem Gehäuseteil 28 geführt, welches der einfacheren Darstellung wegen in Fig. 4 weggelassen wurde. Der Schwenkhebel 34 ist an seinem einen freien Ende im unbetätigten Zustand des Betätigungsmagneten 12 in Anlage mit dem Betätigungsteit 16, wobei gemäß der Darstellung nach der Fig.4 gerade das Betätigungsteil 16 in den Spulenkörper 14 des Betätigungsmagneten 12 eingefahren ist und insoweit den Schwenkweg 22 für den Schwenkhebel 34 freigibt. Insoweit bildet in der zurückgezogenen Stellung des Betätigungsteils 16 dieses mit seiner Vorderseite im wesentlichen eine ebene Vorderfläche mit der dem Betrachter der Fig.4 zugewandten Stirnseite des Spulenkörpers 14 aus.

Gemäß der Darstellung nach der Fig.4 ist dort der Schwenkhebel 34 noch in seiner unbetätigten Stellung gezeigt, so dass insoweit am anderen Ende des Schwenkhebels 34 das Steuerteil 10 in der Verriegelungsstellung gehalten ist. Das Verriegelungsteil 30 der Steuereinrichtung 24 ist in der Art einer Klauen- oder Maulöffnung 36 ausgebildet und damit das dahingehende Verriegelungsteil 30 zentral, also kräfteausgeglichen in der Mitte der Vorrichtung angeordnet werden kann (vgl. Fig.1), weist insoweit der Schwenkhebel 34 eine axiale Versatzstelle 38 auf, um die dahingehende Mittenanordnung gewährleisten zu können. Für einen Entriegelungsvorgang schwenkt daher die Klauen- oder Maulöffnung 36 im Uhrzeigersinn um die Schwenkachse 26 aus der verriegelten Position nach den Fig.1 und 2 in eine entriegelte Stellung nach der Fig.3.

Bei bestimmten Anwendungsaufgaben wäre es auch denkbar, beispielsweise an der zweiten Achse 26 selbst eine Drehfeder od. dgl. anzubringen, um insoweit den Schwenkhebel längs des Schwenkweges 22 zu bewegen, sobald das Betätigungsteil 16 in den Spulenkörper 14 eingezogen ist. Im vorliegenden Fall wird jedoch im betätigten Zustand des Betätigungsmagneten 12 das Steuerteil 10 mittels eines Energiespeichers die Entriegelung für den Schwenkhebel 34 von außen her veranlassen, der dann insoweit um die zweite Achse 26 in die Entriegelungsstellung verschwenkt. Hierfür sieht das Steuerteil 10 eine Büge!feder, vorzugsweise in der Art einer Doppel-Bügelfeder 40 vor, deren Energiespeicher in Form von Federenergie im entriegelten Zustand ein Wegschwenken längs der Bewegungsbahn 32 aus der Steuereinrichtung 24 für das Steuerteil 10 ermöglicht, und zwar um eine dritte Achse 42, die wiederum parallel zu der ersten und zweiten Achse 20,26 verläuft. Aufgrund der Eigendynamik des Steuerteils 10 in Form der Doppel-Bügelfeder 40 genügt es also, den Betätigungsmagneten 12 auszulösen, um die Entriegelung insoweit fremdgesteuert vornehmen zu können.

Der Betätigungsmagnet 12 ist topfartig ausgebildet und weist insoweit einen ringförmigen Spulenkörper 14 auf, dessen Wicklungsenden an den Anschlußstecker 18 entsprechend angeschlossen sind. Als Betätigungsteil 16 umfaßt der Spulenkörper 14 eine flachzylindrische Betätigungsstange, die vergleichbar eine Topfform aufweist zu dem ringförmigen Spulenkörper 14 und in diesem längsverfahrbar geführt ist. Wie des weiteren die Fig.4 zeigt, ist der Schwenkhebel 34 an seinem einen freien, dem Betätigungsteil 16 zugewandten Ende klinkenartig sich verjüngend mit einer Krümmung versehen, die zumindest teilweise der Krümmung des Außenumfangs des Betätigungsteils 16 nachfolgt (vgl. auch Fig.2). Die genannte Doppel-Bügelfeder 40 mit ihrem Bügelteil 44 greift in der Verriegelungsstellung in das Verriegelungsteil 30 der Steuereinrichtung 24 ein, wobei die beiden, die Doppelanordnung betreffenden Rundfedern 46 die dritte Achse 42 mittig umfassen.

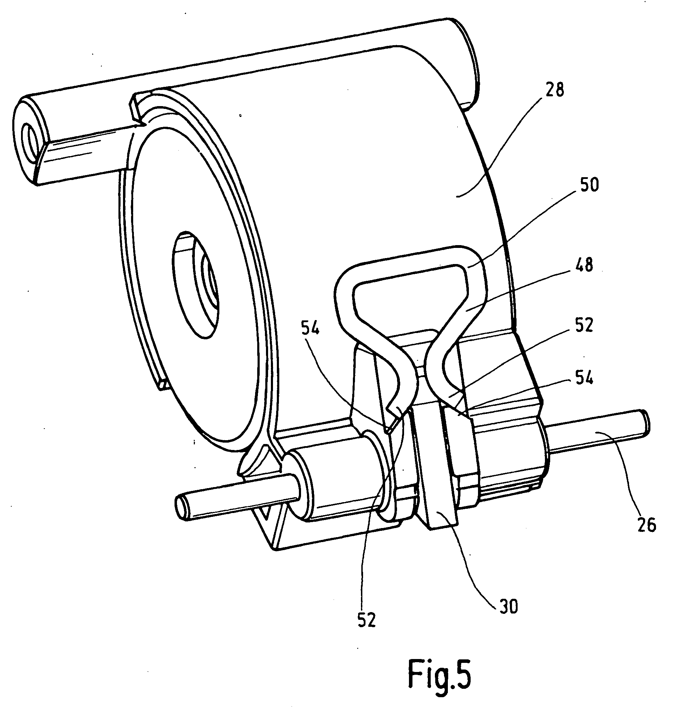

Wird gemäß der Darstellung nach der Fig.3 im Gegenuhrzeigersinn das Steuerteil 10 um die Achse 42 rückverschwenkt, rastet insoweit das Bügelteil 44 wieder in die Klauen- oder Maulöffnung 36 ein, und der Schwenkhebel 24 verschwenkt entgegen dem Uhrzeigersinn in seine Ausgangsstellung nach der Fig.4. Wird nun der Betätigungsmagnet 12 nicht länger bestromt, fährt das Betätigungsteil 16 beispielsweise unter der Wirkung einer nicht näher dargestellten Rückstellfeder aus und liegt dann mit seinem Außenumfang wieder an der Innenseite des Schwenkhebels 34 unmittelbar an. Insoweit kann also über einen entsprechenden Rückstellvorgang die Entriegelungsvorrichtung wieder "scharf" gemacht werden. Will man dies verhindern, beispielsweise weil Teile einer Sicherheitseinrichtung (nicht dargestellt) oder die Sicherheitseinrichtung selbst zu tauschen ist, muß verhindert werden, dass das Bügelteil 44 wieder ungewollt in entsprechenden Eingriff mit dem Verriegelungsteil 30 und seiner Klauen- und Maulöffnung 36 kommt. Um dies zu verhindern, müßte das Verriegelungsteil 30 in seiner in der Fig.3 gezeigten Entriegelungsstellung gehalten werden. Hierzu dient das in der Fig.5 dargestellte Blockierteil 48, das ein ungewolltes erneutes Verriegeln des Steuerteils 10 verhindert.

Das Blockierteil 48 besteht vorzugsweise gleichfalls aus einer Bügelfeder 50, die mit ihren freien Federenden 52 zumindest teilweise längs des Gehäuseteils 28 geführt, in eine das Steuerteil 10 freigebende Stellung bewegbar ist. Um die dahingehenden Verhältnisse besser zu verdeutlichten, ist in der Fig.5 bezogen auf die Frontansicht ein Teil der Wandung des Gehäuseteils 28 weggelassen, um so den Angriff der Bügelfeder 50 an der Oberseite des Verriegelungsteils 30 zu verdeutlichen. Bei der in der Fig.5 gezeigten Stellung ist die Bügelfeder 50 als Blockierteil in ihrer Blockierstellung gezeigt. Wird der Entriegelungsvorgang ausgelöst, dann schnappt das Verriegelungsteil 30 nach oben und kommt in den Klemmspalt zwischen den Federenden 52. Die Federenden 52 klemmen dann zwischen sich einen Teil des Verriegelungsteils 30 derart ein, dass dieser in der Entriegelungsposition nach der Fig.3 gehalten ist. Wird nun in Blickrichtung auf die Fig.5 gesehen von Hand die Bügelfeder 50 nach unten verschoben, gleiten die freien Federenden 52 entlang von Schrägführungen 54 des Gehäuseteils 28 ab, so dass die Federenden 52 sich voneinander wegspreizen und dann den Schwenkweg für das Verriegelungsteil 30 insoweit freigeben, damit dieses wieder in die Verriegelungsstellung zurückgehen kann. Bei einem erneuten Entriegelungsvorgang schnappt das Verriegelungsteil 30 wieder nach oben und nimmt dergestalt die Bügelfeder 50 unter erneuter Bildung des Klemmspaltes für das Verriegelungsteil 30 mit, so dass insofern dieses dann wieder in seiner entriegelten Lage blockiert ist und nicht ungewollt in die Verriegelungsstellung zurück verschwenkt werden kann.

Die erfindungsgemäße Entriegelungseinrichtung läßt sich für eine Vielzahl an Anwendungen einsetzen, und anstelle eines Steuerteils 10 in Form einer Doppel-Bügelfederanordnung 40 kann auch eine einfache Feder (nicht dargestellt) treten. Auch lassen sich sonstige technische Komponenten, wie beispielsweise Teile eines Überrollbügelsystems, von der Klauen- oder Maulöffnung 36 des Verriegelungsteils 30 halten, so dass insoweit der Anwendungsbereich beliebig erweiterbar ist. Ferner kann eine Bauausführung nach Fig.1 auch ohne Gehäuseteile als Entriegelungsvorrichtung eingesetzt werden, oder Fremd-Gehäuseteile (nicht dargestellt) bilden am Einbauort die Aufnahme für die Vorrichtung aus.

Die erfindungsgemäße Lösung zeichnet sich insbesondere auch noch dadurch aus, dass die Funktionssteuerung über einen Einhebel erfolgt in Form des Schwenkhebels 34.

## Patentansprüche

1. Entriegelungsvorrichtung für ein Steuerteil (10), mit einem Betätigungsmagneten (12), der, in einem Spulenkörper (14) und/oder in Gehäuseteilen des Betätigungsmagneten (12) geführt, ein Betätigungsteil (16) aufweist, das entlang einer ersten Achse (20) verfahrbar ist und das in einer Betätigungsstellung einen Schwenkweg (22) für eine Steuereinrichtung (24) freigibt, die um eine zweite Achse (26) schwenkbar angeordnet ist, wobei die Steuereinrichtung (24) über ein Verriegelungsteil (30) verfügt, das, mittels des Betätigungsteils (16) über die Steuereinrichtung (24) entriegelt, die Bewegungsbahn (32) für das anzusteuernde Steuerteil (10) freigibt, **dadurch gekennzeichnet, dass** die Steuereinrichtung (24) einen Schwenkhebel (34) aufweist, der um die zweite Achse (26) schwenkbar in einem Gehäuseteil (28) geführt ist, dass die zweite Achse (26) parallel zur ersten Achse (20) verläuft, dass der Schwenkhebel (34) an seinem einen freien Ende im unbetätigten Zustand des Betätigungsmagneten (12) in Anlage mit dem Betätigungsteil (16) ist und dass am anderen Ende des Schwenkhebels (34) das Verriegelungsteil (30) vorgesehen ist, durch das das Steuerteil (10) in der Verriegelungsstellung gehalten ist.

2. Entriegelungsvorrichtung nach Anspruch 1, **dadurch gekennzeichnet, dass** im betätigten Zustand des Betätigungsmagneten (12) das Steuerteil (10) mittels eines Energiespeichers die Entriegelung für den Schwenkhebel (34) veranlasst, der insoweit um die zweite Achse (26) in die Entriegelungsstellung verschwenkt.

3. Entriegelungsvorrichtung nach Anspruch 1 oder 2, **dadurch gekennzeichnet, dass** der Betätigungsmagnet (12) topfartig ausgebildet einen ringförmigen Spulenkörper (14) aufweist, der als Betätigungsteil (16) eine flachzylindrische - auch in Polygonform - Betätigungsstange umfaßt.

4. Entriegelungsvorrichtung nach einem der Ansprüche 1 bis 3, **dadurch gekennzeichnet, dass** das Steuerteil (10) aus einer Bügelfeder, vorzugsweise in der Art einer Doppel-Bügelfeder (40), gebildet ist, deren Energiespeicher in Form von Federenergie im entriegelten Zustand ein Wegschwenken längs der Bewegungsbahn (32) der Steuereinrichtung (24) für die Feder ermöglicht, und zwar um eine dritte Achse (42), die parallel zu der ersten und zweiten Achse (20,26) verläuft.

5. Entriegelungsvorrichtung nach einem der Ansprüche 1 bis 4, **dadurch gekennzeichnet, dass** das Verriegelungsteil (30) der Steuereinrichtung (24) in der Art einer Klauen- oder Maulöffnung (36) ausgebildet ist.

6. Entriegelungsvorrichtung nach einem der Ansprüche 1 bis 5, **dadurch gekennzeichnet, dass** der Schwenkhebel (34) an seinem einen freien, dem Betätigungsteil (16) zugewandten Ende klinkenartig sich verjüngend mit einer Krümmung versehen ist, die zumindest teilweise der Krümmung des Außenumfanges des Betätigungsteils (16) nachfolgt.

7. Entriegelungsvorrichtung nach einem der Ansprüche 1 bis 6, **dadurch gekennzeichnet, dass** die Doppel-Bügelfeder (40) mit ihrem Bügelteil (44) in der Verriegelungsstellung in das Verriegelungsteil (30) der Steuereinrichtung (24) eingreift und dass die beiden die Doppelanordnung betreffenden Rundfedern (46) die dritte Achse (42) begrenzen.

## Claims

1. An unlocking device for a control part (10) with an actuating magnet (12) which, guided in a coil element (14) and/or in housing parts of the actuating magnet (12), has an actuating part (16) which can be displaced along a first axis (20) and which releases, in an actuation position, a swivel path (22) for a control device (24) which is arranged such as to swivel about a second axis (26), the control device (24) having a locking part (30) which, when unlocked by means of the actuating part (16) via the control device (24), releases the trajectory (32) for the control part (10) to be actuated, **characterised in that** the control device (24) has a swivel lever (34) which is guided in a housing part (28) such as to swivel about the second axis (26), that the second axis (26) extends parallel to the first axis (20), that the swivel lever (34), at its one free end and when the actuating magnet (12) is not actuated, is in contact with the actuating part (16), and that provided on the other end of the swivel lever (34) is the locking part (30) by means of which the control part (10) is held in the locked position.

2. The unlocking device according to Claim 1, **characterised in that**, in the actuated state of the actuating magnet (12) the control part (10) brings about the unlocking for the swivel lever (34) by means of an energy store, in this respect said swivel lever swivelling about the second axis (26) into the unlocked position.

3. The unlocking device according to Claim 1 or 2, **characterised in that** the actuating magnet (12), in the form of a pot, has an annular coil element (14) which, as an actuating part (16), comprises a flat-cylindrical actuating rod - also in the form of a polygon.

4. The unlocking device according to any of Claims 1 to 3, **characterised in that** the control part (10) is formed from a bow spring, preferably in the manner of a double bow spring (40), the energy store of which in the form of spring energy enables in the unlocked state a swivelling away along the trajectory (32) of the control device (24) for the spring about a third axis (42) which extends parallel to the first and the second axis (20, 26).

5. The unlocking device according to any of Claims 1 to 4, **characterised in that** the locking part (30) of the control device (24) is formed in the manner of a jaw or mouth opening (36).

6. The unlocking device according to any of Claims 1 to 5, **characterised in that** the swivel lever (34) is provided on its one free end, facing towards the actuating part (16) and tapering like a latch, with a curve which at least partially follows the curve of the outer circumference of the actuating part (16).

7. The unlocking device according to any of Claims 1 to 6, **characterised in that** in the locked position the double bow spring (40) engages with its bow part (44) in the locking part (30) of the control device (24) and that the two round springs (46) relating to the dual arrangement define the third axis (42).

## Revendications

1. Dispositif de déverrouillage d'une partie (10) de commande, comprenant un aimant (12) d'actionnement qui, passant dans un corps (14) de bobine et/ou dans des parties d'enveloppe de l'aimant (12) d'actionnement, a une partie (16) d'actionnement, qui peut être déplacée le long d'un premier axe (20) et qui, dans une position d'actionnement, libère un trajet (22) de pivotement pour un dispositif (24) de commande monté pivotant autour d'un deuxième axe (26), le dispositif (24) de commande disposant d'une partie (30) de verrouillage qui, déverrouillée au moyen de la partie (16) d'actionnement par le dispositif (24) de commande, libère le trajet (32) de déplacement de la partie (10) de commande à commander, **caractérisé en ce que** le dispositif (24) de commande a un levier (34) pivotant qui est guidé dans une partie (28) d'enveloppe de manière à pouvoir pivoter autour du deuxième axe (26), **en ce que** le deuxième axe (26) est parallèle au premier axe (20), **en ce que** le levier (34) pivotant est, à l'une de ses extrémités libres alors que l'aimant (12) d'actionnement est à l'état non actionné, en contact avec la partie (16) d'actionnement et **en ce que**, à l'autre extrémité du levier (34) pivotant, est prévue la partie (30) de verrouillage par laquelle la partie (10) de commande est maintenue en la position de verrouillage.

2. Dispositif de déverrouillage suivant la revendication 1, **caractérisé en ce que**, lorsque l'aimant (12) d'actionnement est à l'état actionné, la partie (10) de commande provoque, au moyen d'un accumulateur d'énergie, le déverrouillage du levier (34) de pivotement, qui pivote dans cette mesure autour du deuxième axe (26) pour venir en la position de déverrouillage.

3. Dispositif de déverrouillage suivant la revendication 1 ou 2, **caractérisé en ce que** l'aimant (12) d'actionnement conformé en cuvette a un corps (14) de bobine annulaire qui comprend, comme partie (16) d'actionnement, une barre d'actionnement cylindrique plate ou également en forme de polygone.

4. Dispositif de déverrouillage suivant l'une des revendications 1 à 3, **caractérisé en ce que** la partie (10) de commande est formée d'un ressort à étrier, de préférence à la façon d'un ressort (40) à étrier double, dont l'accumulateur d'énergie, sous la forme d'énergie de ressort, permet à l'état déverrouillé un éloignement en pivotement du ressort le long du trajet (32) de déplacement du dispositif (24) de commande et cela autour d'un troisième axe (42) qui est parallèle au premier et au deuxième axes (20, 26).

5. Dispositif de déverrouillage suivant l'une des revendications 1 à 4, **caractérisé en ce que** la partie (30) de verrouillage du dispositif (24) de commande est constituée sous la forme d'une ouverture (36) à griffe ou à mors.

6. Dispositif de déverrouillage suivant l'une des revendications 1 à 5, **caractérisé en ce que** le levier (34) pivotant est muni, à l'une de ses extrémités libres tournées vers la partie (16) d'actionnement en se rétrécissant à la manière d'un cliquet, d'une courbure qui suit, au moins en partie, la courbure du pourtour extérieur de la partie (16) d'actionnement.

7. Dispositif de déverrouillage suivant l'une des revendications 1 à 6, **caractérisé en ce que** le ressort (40) à étrier double pénètre par sa partie (44) d'étrier, en la position de verrouillage, dans la partie (30) de verrouillage du dispositif (24) de commande et **en ce que** les deux ressorts ronds (46) de l'agencement double délimitent le troisième axe (42).
